# EUROPÄISCHE PATENTSCHRIFT

(11) **EP 4 272 954 B1**
(45) Veröffentlichungstag und Bekanntmachung des Hinweises auf die Patenterteilung: **18.03.2026**
(21) Anmeldenummer: 23171097.1
(22) Anmeldetag: 02.05.2023
(51) Int. Cl.: B32B 15/00, B32B 15/20, B32B 7/06, B32B 38/00, B29C 70/02, B29C 70/40, B29C 70/54, B29C 70/48, B32B 5/26, B32B 37/06, B29C 51/02, B29C 51/26, B32B 3/30, B32B 15/14, H05K 3/00, H05K 1/03

(54) **VERFAHREN ZUM HERSTELLEN EINES BAUTEILS AUS EINEM VERBUNDMATERIAL MIT LOKAL UNTERSCHIEDLICHEN DICKEN**
METHOD FOR PRODUCING A COMPONENT FROM A COMPOSITE MATERIAL HAVING LOCALLY DIFFERENT THICKNESSES
PROCÉDÉ DE FABRICATION D'UN COMPOSANT EN MATÉRIAU COMPOSITE AYANT DIFFÉRENTES ÉPAISSEURS LOCALEMENT

(30) Priorität: 02.05.2022 DE 102022110728
(43) Veröffentlichungstag der Anmeldung: 08.11.2023
(73) Patentinhaber: Premium AEROTEC GmbH, 86179 Augsburg (DE)
(72) Erfinder: HOLLMANN, Marc, 86179 Augsburg (DE); MIARIS, Angelos, 86179 Augsburg (DE); HAYEN, Henning, 86179 Augsburg (DE); RÖGER, Lukas, 86179 Augsburg (DE); UELLENDAHL, Matthias, 86179 Augsburg (DE); FRESE, Tanja, 86179 Augsburg (DE); WOHLSEN, Lenard, 86179 Augsburg (DE); EDELMANN, Klaus, 86179 Augsburg (DE)
(74) Vertreter: LKGLOBAL Partnerschaftsgesellschaft mbB

(56) Entgegenhaltungen:
- EP-A1- 0 065 765
- EP-A2- 0 158 027
- WO-A1-2016/003983
- JP-A- H0 431 091
- US-A1- 2012 228 005
- US-B2- 10 392 548

## Beschreibung

### Technisches Gebiet

Die vorliegende Beschreibung betrifft ein Verfahren zum Herstellen eines Bauteils aus einem komplexen Verbundmaterial mit lokal unterschiedlichen Dicken.

### Technischer Hintergrund

Für die Herstellung von Baugruppen und komplexen Strukturen aus einem Verbundmaterial, beispielsweise einem faserverstärkten Kunststoff, sind zahlreiche Herstellungsverfahren bekannt. Bauteile mit gleichförmiger Dicke sind dabei zumeist einfacher herzustellen als Bauteile mit Vertiefungen, Taschen oder lokal unterschiedlichen Dicken. Zum lokalen Anordnen von Taschen in Bauteilen aus einem Verbundmaterial ist bekannt, die betreffenden Bauteile mit gleichförmiger Dicke herzustellen, um dann bereichsweise durch Schneidwerkzeuge Material zum Herausarbeiten der Taschen flächig zu entfernen. Bei modernen, hochfesten Verbundwerkstoffen wird das Schneidwerkzeug dabei jedoch stark beansprucht bzw. verschlissen und die Bearbeitung ist zeitaufwändig. Unterschiedliche Dicken bei im RTM-Verfahren hergestellten Bauteilen oder aus Prepregs sind bekannt, jedoch können hierbei problematische Fließfrontverläufe des Harzes oder ungleichmäßige Temperaturgradienten resultieren. Ausgeprägte Dickenverhältnisse von 1:2 oder 1:3 sind daher problematisch. Folglich sind die Kosten für die Herstellung eines Taschen oder Vertiefungen aufweisenden Bauteils aus einem Verbundmaterial kostenintensiv. WO2016/003983 A1 und US2012/228005 A1 offenbaren Verfahren und Syteme zum Herstellen eines Bauteils aus einem Verbundmaterial mit lokal unterschiedlichen Dicke. EP0065765 A1 offenbart ein Verfahren zum Herstellen eines Bauteils aus einem Verbundmaterial mit lokal unterschiedlichen Dicken.

Es ist folglich eine Aufgabe der Erfindung, ein Verfahren bzw. ein System zum Herstellen eines Bauteils aus einem Verbundmaterial mit lokal unterschiedlichen Dicken vorzuschlagen, welches kostengünstig und rasch durchführbar ist.

Die Aufgabe wird gelöst durch ein Verfahren zum Herstellen eines Bauteils aus einem komplexen Verbundmaterial mit lokal unterschiedlichen Dicken mit den Merkmalen des unabhängigen Anspruchs 1. Vorteilhafte Ausführungsformen und Weiterbildungen der Erfindung sind den Unteransprüchen und der nachfolgenden Beschreibung zu entnehmen.

Es wird ein Verfahren gemäß Anspruch 1 vorgeschlagen.

Das Bauteil kann mit unterschiedlichen Faser-Matrix-Systemen hergestellt sein, mit denen unidirektionale Fasern, die bevorzug endlos sind, Gewebe und/oder Gelege in Form mehrerer Lagen in ein Matrixmaterial eingebunden werden und damit einen Materialverbund ausbilden. Die Fasern und das Matrixmaterial können je nach Anwendungsgebiet und zu erwartender mechanischer und thermischer Belastung ausgewählt werden.

In einer Ausführungsform könnten beispielsweise Reaktionsharze eingesetzt werden, die unter Druck und Wärme aushärten und Duromere bilden. Die beiden Laminatanordnungen könnte dann etwa durch Prepregs hergestellt und gegebenenfalls vorgehärtet sein. Es sind jedoch auch mit Harz infiltrierbare Lagenaufbauten denkbar, die mit einem RTM- oder Vakuuminfusionsverfahren infiltrierbar sind. Die erste Laminatanordnung kann einen Vorformling (auch als "Preform" bekannt) umfassen.

Es sind indes auch thermoplastische Matrixmaterialien vorstellbar, wie etwa PPS, PEEK, PEKK, PEI, PAEK und andere. Die beiden Laminatanordnungen sind dann bevorzugt bereits in sich vollständig imprägnierte Teilkomponenten, welche durch Aufeinanderlegen und Erwärmen miteinander verbindbar sind. Zudem sind derartige Laminatanordnungen mittels eines Thermoforming-Prozesses umformbar. Während des Thermoforming kann eine Verbindung der beiden Laminatanordnungen miteinander erfolgen, sodass die Trennschicht dazwischen eingeschlossen wird.

Die erste Laminatanordnung könnte in einer einfachen Variante flächig ausgeführt sein und eine gleichförmige Stärke umfassen. Die flächige Form kann ein- oder mehrfach gekrümmt sein. Sie weist eine erste Oberfläche auf, die mit der zweiten Oberfläche der zweiten Laminatanordnung eine Verbindung eingeht.

Die zweite Laminatanordnung könnte auf dieselbe Weise hergestellt sein und eine zusammenhängende Anordnung aus mehreren Schichten aus unidirektionalen Fasern, einem Gewebe und/oder Gelege umfassen. Grundsätzlich könnte die zweite Laminatanordnung auch Fasern umfassen, die auf andere Art verteilt oder ausgerichtet sind als in der ersten Laminatanordnung. Die zweite Oberfläche der zweiten Laminatanordnung ist derart auszubilden, dass sie flächenbündig auf die erste Oberfläche auflegbar ist.

Die beiden Laminatanordnungen weisen jeweils eine Stärke auf, die zusammen die Dicke des gewünschten Bauteils ergeben. Ein Kern der Erfindung liegt darin, eine Trennschicht lokal zwischen den beiden Laminatanordnungen vorzusehen, wo eine vorgesehene Vertiefung, eine Tasche oder eine beliebig verringerte Dicke gewünscht ist. Die Trennschicht ist dabei dazu ausgebildet, eine Verbindung der beiden Laminatanordnungen in dem betreffenden Trennabschnitt zu verhindern.

Zum Herstellen eines geschlossenen Bauteils aus dem Verbundmaterial werden die beiden Laminatanordnungen miteinander verbunden, indem beispielsweise Wärme und/oder Druck auf die beiden aufeinanderliegenden Bauteile ausgeübt wird. Abhängig von dem verwendeten Matrixmaterial könnten die beiden Laminatanordnungen gemeinsam aushärten oder durch Erweichen bzw. Aufschmelzen des Matrixmaterials an der Schnittstelle zwischen der ersten Oberfläche und der zweiten Oberfläche miteinander verschmelzen. Da jedoch lokal die Trennschicht angeordnet ist, wird dieser Verbindungsprozess lokal verhindert, sodass in dem von der Trennschicht definierten Trennabschnitt auch nach dem Verbinden der beiden Laminatanordnungen diese noch getrennt bleiben. Durch Führen des Schneidwerkzeugs entlang einer mit der Trennschicht korrelierenden Kontur wird lokal die zweite Laminatanordnung aufgetrennt. Aufgrund der fehlenden Verbindung zu der darunterliegenden ersten Laminatanordnung reicht das Herausschneiden der Kontur aus, um das vorgesehene Teilstück der zweiten Laminatanordnung vollständig von der ersten Laminatanordnung zu lösen. Nach Entfernen des Teilstücks, beispielsweise von Hand oder mittels eines Saugnapfs, ist die gewünschte Vertiefung in dem Bauteil hergestellt.

Durch Führen des Schneidwerkzeugs lediglich auf einer einzigen, geschlossenen Kontur kann der Verschleiß des Schneidwerkzeugs verringert und zudem der zeitliche Aufwand für das Herstellen der Vertiefung gegenüber bekannten Verfahren deutlich reduziert werden. Die Kosten für den Werkzeugeinsatz werden deutlich reduziert. Weiterhin kann durch die Trennschicht zudem verhindert werden, dass ein Faseraufbau der ersten Laminatanordnung, bzw. des in dem Bauteil verbleibenden Teils der Fasern an dem Ort der verringerten Dicke, durch das Schneidwerkzeug beschädigt wird.

In einer vorteilhaften Ausführungsform weisen die erste Laminatanordnung und die zweite Laminatanordnung einen faserverstärkten Kunststoff auf, der Fasern aus einer Gruppe von Fasern umfasst, die Gruppe aufweisend Kohlefasern, Glasfasern, Aramidfasern und Mischungen hiervon. Die Fasern verlaufen hierbei in mindestens einer Richtung und bevorzugt in mehreren, zueinander einen Winkel einschließende Richtungen. Insbesondere sind die Fasern in Form von Faserbündeln, Geweben oder Gelegen ausgebildet, welche als einzelne, Flächengebildet geformt sind. Die besonderen Vorteile des Verfahrens ergeben sich insbesondere bei endlosen Fasern, da durch die erfindungsgemäß angeordnete Trennschicht ein Verletzen von Fasern einer verbleibenden Lage zuverlässig verhindert werden kann. Statt endloser Fasern könnten dennoch auch Kurzfasern und/oder ungewebtes Fasermaterial, aber auch gewebtes Material eingesetzt werden.

In einer vorteilhaften Ausführungsform wird die Trennschicht in die erste Laminatanordnung oder die zweite Laminatanordnung eingearbeitet, sodass sie an der ersten Oberfläche bzw. zweiten Oberfläche bündig mit dem benachbarten Material der ersten bzw. zweiten Laminatanordnung abschließt. Die erste Laminatanordnung bzw. die zweite Laminatanordnung könnte bereits vorgefertigt mit der Trennschicht ausgestattet sein. Dabei ist die Trennschicht nicht auf der betreffenden Oberfläche der ersten Laminatanordnung bzw. der zweiten Laminatanordnung angebracht, sondern direkt in den Lagenaufbau der ersten bzw. zweiten Laminatanordnung integriert. Die nach außen gewandte Oberfläche der betreffenden Laminatanordnung schließt dann bündig mit dem benachbarten Material ab.

In einer vorteilhaften Ausführungsform weist die Trennschicht eine Stärke auf, die einer Stärke einer an die erste Oberfläche bzw. die zweite Oberfläche angrenzenden Lage der betreffenden Laminatanordnung entspricht. Die Trennschicht kann gezielt mit einer äußersten Lage von Fasern kombiniert werden, die an die erste bzw. zweite Oberfläche angrenzt. In dieser äußersten Lage sind örtlich Fasern entnommen und durch die Grenzschicht ersetzt. Die Fasern innerhalb des Trennabschnitts sind folglich an der Kontur der Trennschicht unterbrochen. Die Trennschicht schließt bevorzugt möglichst exakt an die Faserenden an. Zwischen den Faserenden und der Trennschicht könnte ein Spalt von weniger als einem Zehntel Millimeter toleriert werden. Ein Hineinragen der Faserenden in den Trennabschnitt ist möglichst zu vermeiden, sodass beim Herausschneiden der Kontur des Trennabschnitts eine Zugkraft auf die Faserenden durch das geführte Werkzeug verhindert wird.

In einer vorteilhaften Ausführungsform weist die Trennschicht einen Kunststoff auf, der bei Temperaturen bis zu 250°C, bevorzugt bis zu 275°C, weiter bevorzugt bis zu 330°C und besonders bevorzugt bis zu 400°C zumindest kurzzeitig formstabil ist. Dies entspricht einer Temperatur, der die erste Laminatanordnung und die zweite Laminatanordnung ausgesetzt werden könnten, um eine Verbindung zwischen den beiden Laminatanordnungen zu schaffen. Um einer thermisch bedingten Zerstörung entgegenzuwirken, ist das Material der Trennschicht hierauf angepasst.

In einer vorteilhaften Ausführungsform umfasst die Trennschicht eine Aluminiumschicht. An die Aluminiumschicht werden keine besonderen mechanischen Anforderungen gestellt und gewöhnliche Legierungen, die beispielsweise Magnesium, Mangan, Silizium und/oder weitere Elemente enthalten, könnten verwendet werden. Durch die Aluminiumschicht kann zuverlässig eine Anhaftung verhindert und gleichzeitig eine ausreichende thermische Stabilität realisiert werden. Das präzise Eintauchen und Führen des Schneidwerkzeugs bis zu der Trennschicht wird hierdurch zudem erleichtert und die verbleibenden, darunterliegenden Lagen weisen daher eine verbesserte Korrosionsfestigkeit auf. Die Aluminiumschicht kann als Folie und bevorzugt als dünnes Blech mit einer Stärke von mehr als einem Zehntel Millimeter, beispielsweise etwa 0,3 mm, realisiert sein. Aluminium ist ein vergleichsweise weiches Material und lässt sich sehr gut spanend bearbeiten. Bei der Verwendung solcher Aluminiumschichten ist es ohne Weiteres möglich, in der richtigen Tiefe zu fräsen, ohne Fasern einer unter der Aluminiumschicht liegenden Lage zu beschädigen, welche später in dem fertigen Bauteil außen liegt, Die Fasern dieser Lage sind folglich nicht durchtrennt und vollständig mit Harz bedeckt. Die mechanischen Eigenschaften bleiben unverändert und das Bauteil bleibt aufgrund der Harzbeschichtung elektrisch isoliert. Dadurch kann im späteren Einsatz der Bauteile eine galvanische Korrosion umliegender Aluminiumbauteile verhindert werden.

Es sind jedoch auch andere metallische Materialien für diesen Zweck denkbar.

In einer vorteilhaften Ausführungsform umfasst die Trennschicht Polyimid. Kommerziell sind Trennfolien in Form von Polyimid aufweisenden Klebebändern oder Folien verfügbar. Dieser Kunststoff ist besonders temperaturbeständig und dauerhaft bis etwa 230°C beständig und kann kurzzeitig einer Temperatur von bis zu 400°C ausgesetzt werden. Damit wird folglich eine effektive Trennung der beiden Laminatanordnungen ermöglicht. Der weitere Vorteil einer solchen Polyimid-Folie liegt darin, dass bei geringer Folienstärke im Falle einer Konsolidierung des Bauteils in einem Werkzeug mit fester Kavität, d.h. einem Ober- und Unterwerkzeug aus Stahl, vor der Ausführung des Verfahrens die zusätzliche Folie die umliegende Konsolidierung der beiden Laminatanordnungen nicht beeinträchtigt.

Die Trennschicht kann einen Kunststoff aufweisen, der zumindest kurzzeitig bis etwa 330°C temperaturbeständig ist. Dies ist bei der Verarbeitung von PPS sinnvoll. Bei der Verarbeitung beispielsweise von PEEK ist eine höhere Temperaturfestigkeit notwendig und die Trennschicht sollte kurzfristig bis zu 400°C oder etwas darüber temperaturbeständig sein.

In einer vorteilhaften Ausführungsform ist der mindestens eine Trennabschnitt von Rändern der ersten Laminatanordnung und der zweiten Laminatanordnung beabstandet. Folglich ragt die herzustellende Tasche bzw. Vertiefung nicht in einen Randbereich des herzustellenden Bauteils hinein, sondern ist an allen Seiten vollständig von Material angrenzender Bereiche umgeben. Es ist folglich notwendig, das Schneidwerkzeug quer zu der ersten bzw. zweiten Oberfläche an den Verbund aus den beiden Laminatanordnungen heranzuführen, in das Material der zweiten Laminatanordnung einzutauchen und anschließend entlang der Kontur zu führen. Eine Eintauchtiefe ist an die Installationstiefe der Trennschicht anzupassen, sodass der Lagenaufbau der ersten Laminatanordnung nicht beschädigt wird.

In einer vorteilhaften Ausführungsform erfolgt das Verbinden der ersten Laminatanordnung mit der zweiten Laminatanordnung bei einem Thermoforming-Prozess. Bei einem Thermoforming-Prozess wird ein Zuschnitt aus einem Plattenmaterial eines thermoplastischen Materials erstellt, in einem Ofen auf Schmelztemperatur gebracht und daraufhin in einem Formwerkzeug mit zwei aufeinander angepassten Formen in eine dreidimensionale Form überführt. Erfindungsgemäß werden beide Laminatanordnungen, die beispielsweise aus einem mit Fasern verstärkten thermoplastischen Material bestehen, mit der Trennschicht versehen und erwärmt. Dabei liegen die Laminatanordnungen auf einer ersten der beiden Formen auf. Nach Erreichen der Schmelztemperatur wird die zweite Form auf die Laminatanordnungen in Richtung der ersten Form gepresst. Beide Laminatanordnungen verbinden sich und schließen die Trennschicht ein. Anschließend kann das dreidimensional geformte Bauteil dem Formwerkzeug, nach entsprechender Abkühlung und Verfestigung, entnommen werden.

Wie vorangehend erwähnt umfasst das erfindungsgemäße Verfahren in einer vorteilhaften Ausführungsform das Umformen durch den Thermoforming-Prozess mittels eines Formwerkzeugs. Das Formwerkzeug besteht aus zwei Formen, von denen eine als männliche Form, die andere als weibliche Form bezeichnet werden kann, wobei beide Formen so aufeinander angepasst sind, dass die Laminatanordnungen unter Einschluss der beiden Laminatanordnungen durch Pressen der beiden Formen aufeinander in eine gewünschte Form gebracht werden.

Die Erfindung betrifft ferner ein System gemäß Anspruch 11.

Das System ist dazu ausgebildet, das erfindungsgemäße Verfahren auszuführen. Das Formwerkzeug dient dabei als Unterlage für die erste Laminatanordnung und die Auflagefläche ist an die Form der ersten Laminatanordnung angepasst. Die erste Laminatanordnung kann flächenbündig auf die Auflagefläche gelegt werden. Die zweite Laminatanordnung kann bei der Ausführung des Verfahrens auf die erste Oberfläche der ersten Laminatanordnung gelegt werden. Wie vorangehend dargelegt kann die erste Oberfläche mindestens einen Trennabschnitt umfassen, an dem eine Trennschicht, das hier als Trennmaterial bezeichnet wird, zum Trennen der beiden Laminatanordnungen voneinander vorgesehen ist. Wie ebenso vorangehend erläutert, kann das Trennmaterial nach dem Auflegen der ersten Laminatanordnung platziert oder direkt bei der Herstellung der ersten Laminatanordnung in eine an die erste Oberfläche angrenzende Lage integriert werden. Die Verbindungsvorrichtung ist vorgesehen, um die beiden Anordnungen miteinander zu verbinden. Es ist besonders günstig, wenn die Verbindungsvorrichtung nach dem Verbinden von dem Formwerkzeug entfernbar ist, um anschließend das Schneidwerkzeug frei bewegen zu können, um die betreffende Kontur oder die betreffenden Konturen aus der zweiten Laminatanordnung herauszuschneiden.

In einer vorteilhaften Ausführungsform ist die Verbindungsvorrichtung dazu ausgebildet, Wärme und auf die Auflagefläche gerichteten Druck auf die Laminatanordnungen auszuüben. Je nach eingesetzten Faser-Matrix-System kann die Verbindungsvorrichtung andersartig ausgestaltet sein. Im Wesentlichen beinhalten geeignete Verbindungsvorrichtungen für gängige Faser-Matrix-Systeme die Möglichkeit, Druck bzw. Temperatur auszuüben, um ein Aufschmelzen oder Aushärten zu erreichen.

In einer vorteilhaften Ausführungsform kann die Verbindungsvorrichtung dazu ausgebildet sein, einen Thermoforming-Prozess auszuführen. Die Verbindungsvorrichtung ist folglich durch das Formwerkzeug realisiert, das eine erste und eine zweite Form aufweist, die aufeinander angepasst sind und durch Pressen der beiden Formen unter Einschluss der Laminatanordnungen mit dazwischenliegender Trennschicht eine Verbindung und gegebenenfalls eine Umformung durchführen können.

In einer vorteilhaften Ausführungsform umfasst das Schneidwerkzeug ein Fräswerkzeug. Das Schneidwerkzeug könnte über eine 2-Achsenführung bewegbar über dem Formwerkzeug angeordnet sein. Die Eintauchriefe des Fräswerkzeugs ist zudem bevorzugt steuerbar. Es ist vorstellbar, bei gekrümmten Bauteilen bzw. gekrümmten Laminatanordnungen ein Kippen der Achse des Fräswerkzeugs zu ermöglichen, sodass diese stets senkrecht zu der lokalen Flächentangente der von der ersten Laminatanordnung abgewandten äußeren Oberfläche der zweiten Laminatanordnung verläuft.

Erfindungsgemäß weist die Verbindungsvorrichtung eine Abdeckung auf, die zusammen mit der Auflagefläche bedarfsweise eine geschlossene Kammer zur Harzinfusion bildet. Die Abdeckung könnte biegeweich oder steif sein. Eine biegeweiche Abdeckung könnte etwa eine Vakuumfolie sein, die auf der Auflagefläche abgedichtet werden kann. Durch Anlegen eines Vakuums wird ein Druck auf den Verbund aus beiden Laminatanordnungen hergestellt und gleichzeitig wird eine Harzinfusion, d.h. eine Vakuuminfusion, betrieben. Alternativ dazu könnte die Abdeckung auch starr sein und Harz über einen Überdruck in den Lagenaufbau geleitet werden. Dieses Verfahren ist auch als RTM-Verfahren bekannt. Diese Ausführungsform bezieht sich insbesondere auf Faser-Matrix-Systeme, die auf einem reaktionshärtenden Harz basieren. Eventuell könnten zusätzliche Fließhilfen vorgesehen sein, die eine bessere Verteilung des Reaktionsharzes ermöglichen.

In einer vorteilhaften Ausführungsform ist die Auflagefläche beheizbar. Die Auflagefläche könnte damit etwa einen Teil der Verbindungsvorrichtung darstellen. Eine Abdeckung oder dergleichen zum Ausüben von Druck auf den Verbund aus Laminatanordnungen könnte folglich einfacher gestaltet werden, da die Heizwirkung primär von dem Formwerkzeug ausgeht.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1a-1e: eine schematische Darstellung eines Systems, mit dem ein Verfahren zum Herstellen eines Bauteils aus einem Verbundmaterial mit lokal unterschiedlichen Dicken hergestellt wird.
- Fig. 2: eine schematische Darstellung des Verfahrens.

### Detaillierte Beschreibung von Ausführungsbeispielen

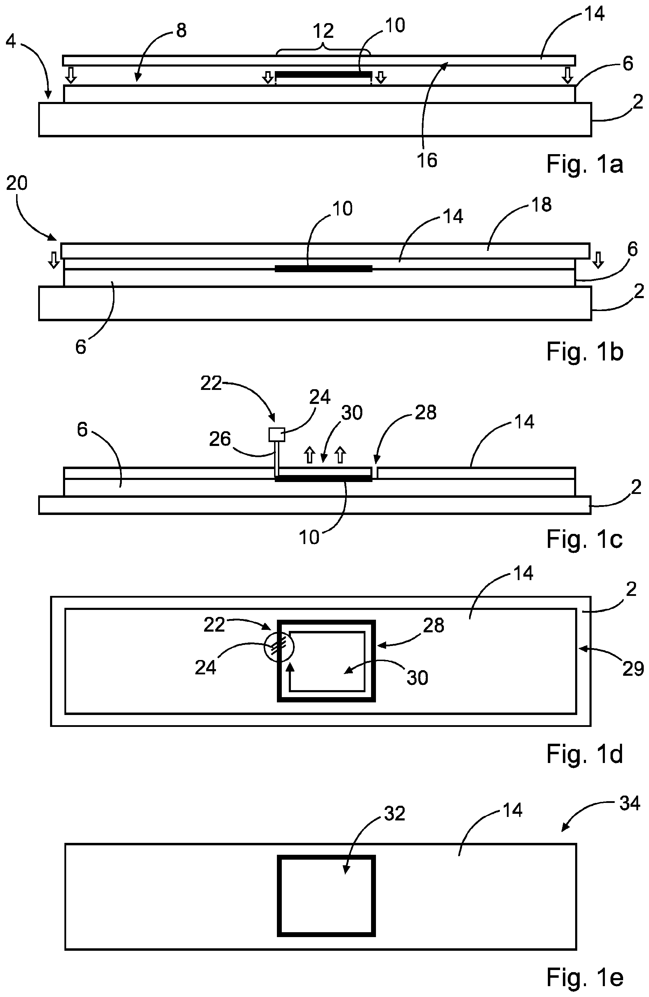

In Fig. 1a bis 1e wird ein Ablauf eines Verfahrens zum Herstellen eines Bauteils aus einem Verbundmaterial mit lokal unterschiedlichen Dicken sowie ein System zum Herstellen eines Bauteils dargestellt. In Fig. 1a ist ein Formwerkzeug 2 dargestellt, das eine Auflagefläche 4 aufweist. Auf dieser ist eine erste Laminatanordnung 6 angeordnet, die eine erste Oberfläche 8 aufweist, welche von dem Formwerkzeug 2 abgewandt ist.

Eine Trennschicht 10 wird auf der ersten Oberfläche 8 abgelegt. Die Trennschicht 10 erstreckt sich anschließend lediglich über einen Trennabschnitt 12 und ist dazu ausgebildet, eine stoffschlüssige Verbindung mit einer zweiten Laminatanordnung 14 zu verhindern, welche anschließend auf die erste Trennschicht 10 gelegt wird. Selbstverständlich ist auch möglich, die Trennschicht 10 bereits in die erste Laminatanordnung 6 zu integrieren, sodass sie bevorzugt bündig mit der ersten Oberfläche 8 abschließt.

Die zweite Laminatanordnung 14 weist eine zu der ersten Laminatanordnung 6 gewandte zweite Oberfläche 16 auf. Sie wird auf die erste Oberfläche 8 aufgelegt, sodass beide Laminatanordnungen 6 und 14 die Trennschicht 10 umschließen.

Fig. 1b zeigt die beiden Laminatanordnungen 6 und 14 in flächigem Kontakt mit der dazwischen liegenden Trennschicht 10. Eine Abdeckung 18 ist auf der zweiten Laminatanordnung 14 positioniert und übt einen Druck auf die Laminatanordnungen 6 und 14 in Richtung des Formwerkzeugs 2 aus. In diesem Beispiel ist die Abdeckung 18 starr ausgebildet und wird durch eine nicht gezeigte externe Vorrichtung mit einer Kraft beaufschlagt.

Dabei könnte zusätzlich vorgesehen sein, dass das Formwerkzeug 2 und/oder die Abdeckung 18 beheizbar ist. Die Abdeckung 18 bildet zusammen mit dem Formwerkzeug 2 eine Verbindungsvorrichtung 20. In diesem Beispiel sind die beiden Laminatanordnungen 6 und 14 faserverstärkte Kunststoffe, bei denen Verstärkungsfasern in ein thermoplastisches Matrixmaterial eingebettet sind. Zum Verbinden der beiden Laminatanordnungen 6 und 14 wird folglich eine Erwärmung unter einem bestimmten Druck durchgeführt, sodass das Matrixmaterial der beiden Laminatanordnungen 6 und 14 aufschmilzt oder erweicht und an der Grenzfläche zwischen der ersten Oberfläche 8 und der zweiten Oberfläche 16 eine Verbindung erfolgt.

In Fig. 1c ist die Abdeckung 18 entfernt. Die beiden Laminatanordnungen 6 und 14 sind miteinander verbunden. Ein Schneidwerkzeug 22 mit einem durch einen Motor 24 angetriebenen Fräser 26 wird an der zweiten Laminatanordnung 14 entlang einer Kontur 28 geführt. Die Kontur 28 entspricht der Randkontur der Trennschicht 10. Dabei taucht der Fräser 26 über eine Eintauchtiefe ein, die einer Stärke der zweiten Laminatanordnung 14 entspricht. Da die Trennschicht 10 eine Verbindung zwischen der ersten Laminatanordnung 6 und der zweiten Laminatanordnung 14 verhindert, wird hierdurch ein Teilstück 30 aus der zweiten Laminatanordnung 14 herausgetrennt. In Fig. 1d wird dies in einer Draufsicht auf die zweite Laminatanordnung 14 dargestellt. An dieser Darstellung wird zudem deutlich, dass die Kontur 28 vollständig innerhalb der ersten Laminatanordnung 6 positioniert sein kann. Der betreffende Trennabschnitt 12 ist von allen Rändern 29 der ersten Laminatanordnung 6 und der zweiten Laminatanordnung 14 folglich beabstandet.

Nach Entnahme des Teilstücks 30 entsteht eine Vertiefung 32 in der zweiten Laminatanordnung 14 bzw. ein Bauteil 34, welches aus den beiden Laminatanordnungen 6 und 14 entstanden ist. Dies ist in Fig. 1e in einer Draufsicht gezeigt. Folglich wird durch dieses Vorgehen ein Bauteil 34 realisiert, welches lokal eine verringerte Dicke aufweist.

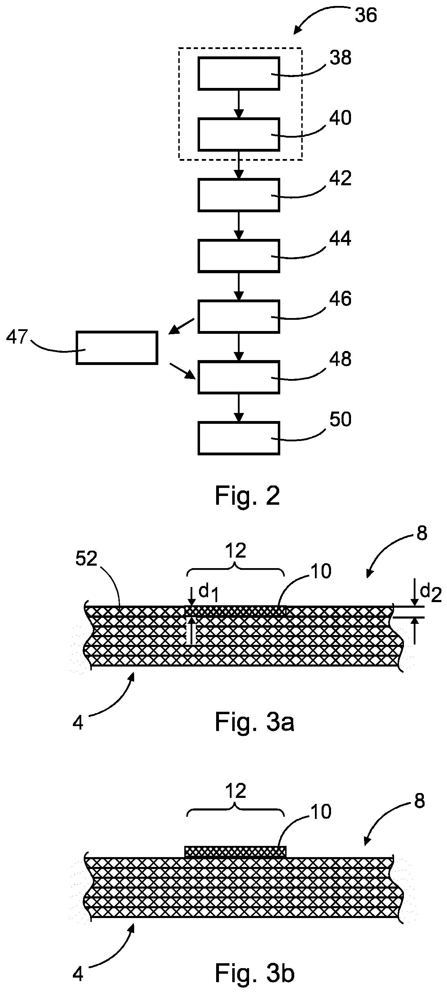

Fig. 2 zeigt den Ablauf des Verfahrens 36 in einer schematischen Blockdarstellung. Das Verfahren 36 weist die Schritte des Bereitstellens 38 der ersten Laminatanordnung 6, des Anordnens 40 der Trennschicht 10 an mindestens einem Trennabschnitt 12 der ersten Oberfläche 8 der ersten Laminatanordnung 6, des Bereitstellens 42 der zweiten Laminatanordnung 14, die die zweite Oberfläche 16 aufweist, welche mit der ersten Oberfläche 8 der ersten Laminatanordnung 6 korreliert, des Auflegens 44 der zweiten Laminatanordnung 14 mit der zweiten Oberfläche 16 auf die erste Oberfläche 8 der ersten Laminatanordnung 6, sodass der mindestens eine Trennabschnitt 12 eingeschlossen wird, des Verbindens 46 der ersten Laminatanordnung 6 mit der zweiten Laminatanordnung 14 durch Erwärmen und/oder Pressen, des optionalen Umformens 47 mittels eines Thermoforming-Prozesses, des Führens 48 des Schneidwerkzeugs 22 entlang mindestens einer mit dem mindestens einen Trennabschnitt 12 korrelierenden Kontur 28 in der zweiten Laminatanordnung, sodass mindestens ein Teilstück 30 der zweiten Laminatanordnung 14 vollständig gelöst wird, und des Entnehmens 50 des mindestens einen gelösten Teilstücks 30 auf, sodass jeweils eine Vertiefung 32 entsteht. Das Anordnen 40 der Trennschicht 10 kann bereits beim Bereitstellen 38 der ersten Laminatanordnung 6 durchgeführt werden, wie durch einen gestrichelten Kasten um die beiden Blöcke 38 und 40 dargestellt. Das Bereitstellen 38 der ersten Laminatanordnung 6 oder der zweiten Laminatanordnung 14 kann das Bereitstellen eines Faserformkörpers umfassen, der mit einem Harz zu infiltrieren ist. Dies kann bei dem Verbinden 46 mittels Vakuuminfusion oder einem RTM-Verfahren erfolgen. Alternativ dazu können die erste Laminatanordnung 6 und die zweite Laminatanordnung 14 vorimprägniert sein oder als ausgehärtete Bauteile mit thermoplastischer Matrix ausgeführt sein. Bei letzterer Ausführung könnten die Laminatanordnungen 6 und 14 mittels eines Thermoforming-Prozesses bei Bedarf von einer flächigen Gestalt in eine dreidimensionale Gestalt umgeformt werden.

In Fig. 3a wird in einer Detaildarstellung in einen Lagenaufbau der ersten Laminatanordnung 4 integrierte Trennschicht 10 gezeigt. Hier weist die Trennschicht 10 eine Stärke d1 auf, die einer Stärke d2 einer an der ersten Oberfläche 8 liegenden äußersten Lage 52 entspricht. Damit schließen die äußerste Lage 52 und die Trennschicht 10 bündig miteinander an der ersten Oberfläche ab. Die äußerste Lage 52 weist folglich einen entsprechend dimensionierten Ausschnitt auf, in den die Trennschicht 10 integriert ist.

In Fig. 3b ist indes die Trennschicht 10 auf der äußersten Lage 52 angeordnet. Dies kann insbesondere für Versuchszwecke sehr einfach und flexibel durchgeführt werden.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, sofern dies durch den Umfang der Ansprüche abgedeckt wird. Bezugszeichen in den Ansprüchen sind nicht als Einschränkung anzusehen.

### Bezugszeichenliste

- 2: Formwerkzeug
- 4: Auflagefläche
- 6: erste Laminatanordnung
- 8: erste Oberfläche
- 10: Trennschicht
- 12: Trennabschnitt
- 14: zweite Laminatanordnung
- 16: zweite Oberfläche
- 18: Abdeckung
- 20: Verbindungsvorrichtung
- 22: Schneidwerkzeug
- 24: Motor
- 26: Fräser
- 28: Kontur
- 29: Rand
- 30: Teilstück
- 32: Vertiefung
- 34: Bauteil mit lokal verringerter Dicke
- 36: Verfahren
- 38: Bereitstellen der ersten Laminatanordnung
- 40: Anordnen der Trennschicht
- 42: Bereitstellen der zweiten Laminatanordnung
- 44: Auflegen der zweiten Laminatanordnung
- 46: Verbinden der Laminatanordnungen
- 47: Umformen
- 48: Führen des Schneidwerkzeugs
- 50: Entnehmen des Teilstücks
- 52: äußerste Lage

## Patentansprüche

1. Verfahren (26) zum Herstellen eines Bauteils (34) aus einem Verbundmaterial mit lokal unterschiedlichen Dicken, aufweisend die Schritte:
Bereitstellen (38) einer ersten Laminatanordnung (6),
Anordnen (40) einer Trennschicht (10) an mindestens einem Trennabschnitt (12) einer ersten Oberfläche (8) der ersten Laminatanordnung (6),
Bereitstellen (42) einer zweiten Laminatanordnung (14), die eine zweite Oberfläche (16) aufweist, welche mit der ersten Oberfläche (8) der ersten Laminatanordnung (6) korreliert,
Auflegen (44) der zweiten Laminatanordnung (14) mit der zweiten Oberfläche (16) auf die erste Oberfläche (8) der ersten Laminatanordnung (6), sodass der mindestens eine Trennabschnitt (12) eingeschlossen wird,
Verbinden (46) der ersten Laminatanordnung (6) mit der zweiten Laminatanordnung (14) durch Erwärmen und/oder Pressen auf einer Verbindungsvorrichtung (20), die dazu ausgebildet ist, die aufeinander liegende erste Laminatanordnung (6) und zweite Laminatanordnung (14) mit eingeschlossenem Trennmaterial durch Einwirkung von Druck und/oder Wärme zu verbinden,
wobei die Verbindungsvorrichtung (20) eine Abdeckung (18) aufweist, die zusammen mit der Auflagefläche (4) bedarfsweise eine geschlossene Kammer zur Harzinfusion bildet;
Führen (48) eines Schneidwerkzeugs (22) entlang mindestens einer mit dem mindestens einen Trennabschnitt (12) korrelierenden Kontur (28) in der zweiten Laminatanordnung (14), sodass mindestens ein Teilstück (30) der zweiten Laminatanordnung (14) vollständig gelöst wird, und
Entnehmen (50) des mindestens einen gelösten Teilstücks (30), sodass jeweils eine Vertiefung (32) entsteht.

2. Verfahren (26) nach Anspruch 1,
wobei die erste Laminatanordnung (6) und die zweite Laminatanordnung (14) einen faserverstärkten Kunststoff aufweisen, der Fasern aus einer Gruppe von Fasern umfasst, die Gruppe aufweisend:
- Kohlefasern,
- Glasfasern,
- Aramidfasern, und
- Mischungen hiervon.

3. Verfahren (26) nach Anspruch 1 oder 2,
wobei die Trennschicht (10) in die erste Laminatanordnung (6) oder die zweite Laminatanordnung (14) eingearbeitet wird, sodass sie an der ersten Oberfläche (8) bzw. zweiten Oberfläche (16) bündig mit dem benachbarten Material der ersten Laminatanordnung (6) abschließt.

4. Verfahren (26) nach Anspruch 3,
wobei die Trennschicht (10) eine Stärke aufweist, die einer Stärke einer an die erste Oberfläche (8) bzw. die zweite Oberfläche (16) angrenzenden Lage der betreffenden Laminatanordnung (6, 14) entspricht.

5. Verfahren (26) nach einem der vorhergehenden Ansprüche,
wobei die Trennschicht (10) einen Kunststoff aufweist, der bei Temperaturen bis zu 250°C, bevorzugt bis zu 275°C, weiter bevorzugt bis zu 330°C und besonders bevorzugt bis zu 400°C zumindest kurzzeitig formstabil ist.

6. Verfahren (26) nach einem der vorhergehenden Ansprüche,
wobei die Trennschicht (10) eine Aluminiumfolie umfasst.

7. Verfahren (26) nach einem der vorhergehenden Ansprüche,
wobei die Trennschicht (10) Polyimid umfasst.

8. Verfahren (26) nach einem der vorhergehenden Ansprüche,
wobei der mindestens eine Trennabschnitt (12) von Rändern der ersten Laminatanordnung (6) und der zweiten Laminatanordnung (14) beabstandet ist.

9. Verfahren (26) nach einem der vorhergehenden Ansprüche,
wobei das Verbinden (46) der ersten Laminatanordnung (6) mit der zweiten Laminatanordnung (14) bei einem Thermoforming-Prozess erfolgt.

10. Verfahren (26) nach Anspruch 9, ferner aufweisend den Schritt:
Umformen (47) durch den Thermoforming-Prozess mittels eines Formwerkzeugs (2).

11. System zum Herstellen eines Bauteils (34) aus einem Verbundmaterial mit lokal unterschiedlichen Dicken, aufweisend:
ein Formwerkzeug (2) mit einer Auflagefläche (4) zur Aufnahme einer ersten Laminatanordnung (6), die eine erste Oberfläche (8) aufweist, und einer mit einer zweiten Oberfläche (16) darauf befindlichen zweiten Laminatanordnung (14),
ein Trennmaterial, das an mindestens einem Trennabschnitt (12) der ersten Oberfläche (8) der ersten Laminatanordnung (6) als Trennschicht (10) anbringbar ist,
eine Verbindungsvorrichtung (20), die dazu ausgebildet ist, die aufeinander liegende erste Laminatanordnung (6) und zweite Laminatanordnung (14) mit dem eingeschlossenen Trennmaterial durch Einwirkung von Druck und/oder Wärme zu verbinden, und
ein Schneidwerkzeug (22), das relativ zu der Auflagefläche (4) bewegbar angeordnet ist und dazu ausgebildet ist, entlang mindestens einer mit dem mindestens einen Trennabschnitt (12) korrelierenden Kontur (28) in der zweiten Laminatanordnung (14) mit einer vorbestimmbaren Eintauchtiefe geführt zu werden, sodass mindestens ein Teilstück (30) der zweiten Laminatanordnung (14) vollständig gelöst wird,
**dadurch gekennzeichnet, dass** die Verbindungsvorrichtung (20) eine Abdeckung (18) aufweist, die zusammen mit der Auflagefläche (4) bedarfsweise eine geschlossene Kammer zur Harzinfusion bildet.

12. System nach Anspruch 11,
wobei die Verbindungsvorrichtung (20) dazu ausgebildet ist, Wärme und auf die Auflagefläche (4) gerichteten Druck auf die Laminatanordnungen (6, 14) auszuüben.

13. System nach Anspruch 11 oder 12,
wobei die Verbindungsvorrichtung (20) dazu ausgebildet ist, einen Thermoforming-Prozess auszuführen.

14. System nach einem der Ansprüche 11 bis 13,
wobei das Schneidwerkzeug (22) ein Fräswerkzeug umfasst.

## Claims

1. A method (26) for manufacturing a component (34) from a composite material with locally varying thicknesses, comprising the steps of:
providing (38) a first laminate assembly (6),
arranging (40) a separating layer (10) at at least one separating section (12) of a first surface (8) of the first laminate assembly (6),
providing (42) a second laminate assembly (14) having a second surface (16) that correlates with the first surface (8) of the first laminate assembly (6),
placing (44) the second laminate assembly (14) with the second surface (16) on the first surface (8) of the first laminate assembly (6) so that the at least one separating section (12) is enclosed,
joining (46) the first laminate assembly (6) to the second laminate assembly (14) by heating and/or pressing on a joining device (20) designed to join the superimposed first laminate assembly (6) and second laminate assembly (14) with the separating material enclosed by applying pressure and/or heat,
wherein the bonding device (20) has a cover (18) which, together with the support surface (4), forms a closed chamber for resin infusion as required;
guiding (48) a cutting tool (22) along at least one contour (28) in the second laminate assembly (14) that correlates with the at least one separating section (12), so that at least one section (30) of the second laminate assembly (14) is completely detached, and
removing (50) the at least one detached section (30) so that a recess (32) is created **in** each case.

2. Method (26) according to claim 1,
wherein the first laminate assembly (6) and the second laminate assembly (14) comprise a fiber-reinforced plastic comprising fibers from a group of fibers, the group comprising:
- carbon fibers,
- glass fibers,
- Aramid fibers, and
- blends thereof.

3. Method (26) according to claim 1 or 2,
wherein the separating layer (10) is incorporated into the first laminate assembly (6) or the second laminate assembly (14) so that it is flush with the adjacent material of the first laminate assembly (6) at the first surface (8) or second surface (16), respectively.

4. Method (26) according to claim 3,
wherein the separating layer (10) has a strength corresponding to a strength of a layer of the respective laminate assembly (6, 14) adjacent to the first surface (8) or the second surface (16), respectively.

5. Method (26) according to one of the preceding claims,
wherein the separating layer (10) comprises a plastic which is dimensionally stable at least for a short time at temperatures up to 250°C, preferably up to 275°C, more preferably up to 330°C, and particularly preferably up to 400°C.

6. Method (26) according to one of the preceding claims,
wherein the separating layer (10) comprises an aluminum foil.

7. Method (26) according to one of the preceding claims,
wherein the separating layer (10) comprises polyimide.

8. Method (26) according to one of the preceding claims,
wherein the at least one separating section (12) is spaced apart from edges of the first laminate assembly (6) and the second laminate assembly (14).

9. Method (26) according to one of the preceding claims,
wherein the joining (46) of the first laminate assembly (6) to the second laminate assembly (14) is performed in a thermoforming process.

10. Method (26) according to claim 9,
further comprising the step of:
forming (47) by means of the thermoforming process using a forming tool (2).

11. System for manufacturing a component (34) from a composite material with locally varying thicknesses, comprising:
a forming tool (2) with a support surface (4) for receiving a first laminate assembly (6) having a first surface (8) and a second laminate assembly (14) with a second surface (16) located thereon,
a separating material that can be applied as a separating layer (10) to at least one separating section (12) of the first surface (8) of the first laminate assembly (6),
a joining device (20) designed to join the superimposed first laminate assembly (6) and second laminate assembly (14) with the enclosed separating material by applying pressure and/or heat, and
a cutting tool (22) which is movably arranged relative to the support surface (4) and is designed to be guided along at least one contour (28) correlating with the at least one separating section (12) in the second laminate assembly (14) with a predeterminable immersion depth, so that at least one section (30) of the second laminate assembly (14) is completely detached,
**characterized in that** the connection device (20) has a cover (18) which, together with the support surface (4), forms a closed chamber for resin infusion as required.

12. System according to claim 11,
wherein the connecting device (20) is designed to apply heat and pressure directed at the support surface (4) to the laminate assemblies (6, 14).

13. System according to claim 11 or 12,
wherein the connecting device (20) is adapted to perform a thermoforming process.

14. System according to any one of claims 11 to 13,
wherein the cutting tool (22) comprises a milling tool.

## Revendications

1. Procédé (26) de fabrication d'un composant (34) en matériau composite présentant des épaisseurs localement différentes, comprenant les étapes suivantes:
fournir (38) un premier assemblage stratifié (6) ;
disposition (40) d'une couche de séparation (10) sur au moins une partie de séparation (12) d'une première surface (8) du premier assemblage stratifié (6),
fournir (42) un deuxième assemblage stratifié (14) ayant une deuxième surface (16) qui correspond à la première surface (8) du premier assemblage stratifié (6),
poser (44) le deuxième assemblage stratifié (14) avec la deuxième surface (16) sur la première surface (8) du premier assemblage stratifié (6) de manière à enfermer la au moins une partie de séparation (12),
assemblage (46) du premier assemblage stratifié (6) avec le deuxième assemblage stratifié (14) par chauffage et/ou pressage sur un dispositif d'assemblage (20) conçu pour assembler le premier assemblage stratifié (6) et le deuxième assemblage stratifié (14) superposés avec le matériau de séparation inclus sous l'effet de la pression et/ou de la chaleur,
le dispositif d'assemblage (20) comportant un couvercle (18) qui, avec la surface d'appui (4), forme si nécessaire une chambre fermée pour l'infusion de résine ;
guidage (48) d'un outil de coupe (22) le long d'au moins un contour (28) correspondant à au moins une partie de séparation (12) dans le deuxième assemblage stratifié (14), de sorte qu'au moins une partie (30) du deuxième assemblage stratifié (14) soit complètement détachée, et
retrait (50) de la au moins une partie détachée (30) de manière à créer respectivement un renfoncement (32).

2. Procédé (26) selon la revendication 1,
dans lequel le premier assemblage stratifié (6) et le deuxième assemblage stratifié (14) comprennent une matière plastique renforcée de fibres, qui comprend des fibres issues d'un groupe de fibres , le groupe comprenant :
- des fibres de carbone,
- des fibres de verre,
- Fibres d'aramide, et
- leurs mélanges.

3. Procédé (26) selon la revendication 1 ou 2,
dans lequel la couche de séparation (10) est incorporée dans le premier assemblage stratifié (6) ou le deuxième assemblage stratifié (14) de manière à affleurer la première surface (8) ou la deuxième surface (16) avec le matériau adjacent du premier assemblage stratifié (6).

4. Procédé (26) selon la revendication 3,
la couche de séparation (10) ayant une épaisseur qui correspond à l'épaisseur d'une couche adjacente à la première surface (8) ou à la deuxième surface (16) de l'assemblage stratifié concerné (6, 14).

5. Procédé (26) selon l'une des revendications précédentes,
la couche de séparation (10) comprenant une matière plastique qui est dimensionnellement stable au moins pendant un court laps de temps à des températures allant jusqu'à 250 °C, de préférence jusqu'à 275 °C, de préférence encore jusqu'à 330 °C et de préférence particulièrement jusqu'à 400 °C.

6. Procédé (26) selon l'une des revendications précédentes,
dans lequel la couche de séparation (10) comprend une feuille d'aluminium.

7. Procédé (26) selon l'une des revendications précédentes,
dans lequel la couche de séparation (10) comprend du polyimide.

8. Procédé (26) selon l'une des revendications précédentes,
dans lequel la au moins une partie de séparation (12) est espacée des bords du premier assemblage stratifié (6) et du deuxième assemblage stratifié (14).

9. Procédé (26) selon l'une des revendications précédentes,
dans lequel la liaison (46) du premier assemblage stratifié (6) avec le deuxième assemblage stratifié (14) est réalisée lors d'un processus de thermoformage.

10. Procédé (26) selon la revendication 9,
comprenant en outre l'étape suivante :
de formage (47) par le processus de thermoformage à l'aide d'un outil de formage (2).

11. Système pour la fabrication d' d'un composant (34) à partir d'un matériau composite présentant des épaisseurs localement différentes , comprenant :
un outil de formage (2) avec une surface d'appui (4) pour recevoir un premier assemblage stratifié (6) qui présente une première surface (8) et un deuxième assemblage stratifié (14) avec une deuxième surface (16) située dessus,
un matériau de séparation pouvant être appliqué sous forme de couche de séparation (10) sur au moins une partie de séparation (12) de la première surface (8) du premier assemblage stratifié (6),
un dispositif d'assemblage (20) conçu pour relier le premier assemblage stratifié (6) et le deuxième assemblage stratifié (14) superposés avec le matériau de séparation intercalé sous l'effet d'une pression et/ou de chaleur, et
un outil de coupe (22) qui est disposé de manière mobile par rapport à la surface d'appui (4) et conçu pour être guidé le long d'au moins un contour (28) correspondant à au moins une partie de séparation (12) dans le deuxième assemblage stratifié (14) avec une profondeur de pénétration prédéterminée, de sorte qu'au moins une partie (30) du deuxième assemblage stratifié (14) soit complètement détachée,
**caractérisé en ce que** le dispositif d'assemblage (20) comporte un couvercle (18) qui, conjointement avec la surface d'appui (4), forme si nécessaire une chambre fermée pour l'infusion de résine .

12. Système selon la revendication 11,
le dispositif d'assemblage (20) étant conçu pour exercer une chaleur et une pression dirigée vers la surface d'appui (4) sur les assemblages stratifiés (6, 14).

13. Système selon la revendication 11 ou 12,
dans lequel le dispositif d'assemblage (20) est conçu pour effectuer un processus de thermoformage.

14. Système selon l'une des revendications 11 à 13,
dans lequel l'outil de coupe (22) comprend un outil de fraisage.
